(19) Europäisches Patentamt

European Patent Office

Office européen des brevets

(11) Veröffentlichungsnummer : **0 433 646 B1**

(12) **EUROPÄISCHE PATENTSCHRIFT**

(45) Veröffentlichungstag der Patentschrift :
**13.09.95 Patentblatt 95/37**

(51) Int. Cl.$^6$ : **H04B 10/148,** H03G 3/20

(21) Anmeldenummer : **90121570.7**

(22) Anmeldetag : **10.11.90**

(54) **Optischer Empfänger.**

(30) Priorität : **16.11.89 DE 3938097**

(43) Veröffentlichungstag der Anmeldung :
**26.06.91 Patentblatt 91/26**

(45) Bekanntmachung des Hinweises auf die
Patenterteilung :
**13.09.95 Patentblatt 95/37**

(84) Benannte Vertragsstaaten :
**DE FR GB IT**

(56) Entgegenhaltungen :
**EP-A- 0 181 146**
**GB-A- 2 068 689**
**PATENT ABSTRACTS OF JAPAN, Bd. 13, Nr.**
**486 (E-840)6. November 1989; & JP-A-1192207**
**MOTOROLA TECHNICAL DEVELOPMENTS,**
**Bd. 2, Januar 1982, Schaumburg, Illinois,US;-**
**Seite 1; O'NEIL: "Transimpedance Amplifier"**

(73) Patentinhaber : **Alcatel SEL**
**Aktiengesellschaft**
**Lorenzstrasse 10**
**D-70435 Stuttgart (DE)**
(84) **DE**
Patentinhaber : **ALCATEL N.V.**
**Strawinskylaan 341,**
**(World Trade Center)**
**NL-1077 XX Amsterdam (NL)**
(84) **FR GB IT**

(72) Erfinder : **Reutter, Jörg**
**1113 Cotswold Court**
**Raleigh N.C. 27069 (US)**
Erfinder : **Krause, Frank**
**Tacitusweg 23**
**W-7140 Ludwigsburg (DE)**
Erfinder : **Raatz, Holger**
**Wörishofener Strasse 5**
**W-7000 Stuttgart 50 (DE)**

(74) Vertreter : **Kugler, Hermann, Dipl.-Phys. et al**
**Alcatel SEL AG**
**Patent- und Lizenzwesen**
**Postfach 30 09 29**
**D-70449 Stuttgart (DE)**

**Beschreibung**

Die Erfindung betrifft einen optischen Empfänger mit einem von einem lichtempfindlichen Bauelement angesteuerten Transimpedanzverstärker und mit einem am Eingang des Transimpedanzverstärkers angeschlossen, im Widerstandswert veränderbaren Bauteil, dessen Widerstandswert von der Größe der Ausgangsspannung des Transimpedanzverstärkers über eine Steuerschaltung veränderbar ist.

Das einem optischen Empfänger zugeleitete optische Empfangssignal kann in seinem Leistungspegel (Lichtpegel) sehr starken Schwankungen unterliegen. Der Empfänger muß deshalb in der Lage sein, sowohl sehr kleine als auch sehr große Lichtpegel fehlerfrei zu detektieren. Die untere Grenze bezeichnet man als Empfängerempfindlichkeit. Sie ist im wesentlichen abhängig von den Rauscheigenschaften des Detektorelements, das als lichtempfindliches Bauelement ausgebildet ist. Ferner hängt die Empfängerempfindlichkeit von der Schaltung eines im optischen Empfänger verwendeten Transimpedanzverstärkers ab. Die obere Grenze wird durch die Übersteuerung des Verstärkers bei zu großen Signalpegeln vorgegeben. Zwischen diesen beiden Grenzen liegt der nutzbare Dynamikbereich des Empfängers.

In vielen Anwendungsfällen ist es wünschenswert, diesen Dynamikbereich nach oben zu erweitern, das heißt, den optischen Empfänger auch für sehr große Lichtpegel auszulegen. Damit dieses möglich ist, werden optische Dämpfungsglieder eingesetzt. Sie vermindern die Lichtleistung, die auf das lichtempfindliche Bauelement trifft. Optische Dämpfungsglieder sind jedoch nicht nur teuer, sondern auch relativ umständlich zu handhaben.

Aus der DE-OS 32 18 439 ist ein optischer Empfänger mit Transimpedanzverstärker bekannt, der an seinem Eingang eine nach Masse führende Diode aufweist, um bei großen Lichtpegeln einen Teil des vom lichtempfindlichen Bauelement gelieferten Signalstroms abzuleiten, so daß die Gefahr einer Verstärkerübersteuerung vermieden ist. Bei dieser bekannten Schaltungsanordnung tritt jedoch das Problem einer relativ großen Eingangskapazität des Transimpedanzverstärkers auf (die stromabhängige Diffusionskapazität der Diode ist wesentlich größer als deren Sperrschichtkapazität), so daß sich die Empfangseigenschaften verschlechtern. Insofern hat der Empfänger nur eine geringe Bandbreite; er eignet sich auch nicht für die Übertragung hoher Bitraten. Wegen der nichtlinearen Kennlinie der Diode wird der Modulationsgrad eines amplitudenmodulierten Signals verringert. Soll die in der Amplitudenmodulation enthaltene Information fehlerfrei erkannt werden, so muß der Modulationsgrad des Empfangssignals mit aufwendigen Schaltungen wieder vergrößert oder der Modulationsgrad des Senders entsprechend erhöht werden. Im letzteren Fall sinkt der Signal-Störabstand für den Träger und die Empfangsleistung muß erhöht werden, um die im Träger enthaltene Information fehlerfrei empfangen zu können.

Es ist weiterhin ein Transimpedanzverstärker mit Übersteuerungsschutz bekannt, bei dem am Verstärkereingang ein Feldeffekttransistor gegen Masse geschaltet ist, vgl. EP-A-0 181 146. Bei großem Photostrom wird dieser Feldeffekttransistor leitend, so daß ein Teil des Photostroms vom Eingang des Transimpedanzverstärkers abgeleitet wird. Eine solche Zusatzbeschaltung am Eingang des Transimpedanzverstärkers bedingt immer eine zusätzliche Kapazität und damit eine Vergrößerung des Rauschens und folglich eine Verringerung der Empfindlichkeit des optischen Empfängers. Dem wirkt auch nicht eine Reihenschaltung aus einem Widerstand und einem Kodensator entgegen, die zwischen Transimpedanzverstärkerausgang und Masse geschaltet ist und bei der der Verbindungspunkt zwischen Widerstand und Kondensator mit dem Source-Anschluß des Feldeffekttransistors verbunden ist. Der Kondensator dient lediglich zum Kurzschließen der Wechselspannung gegen Masse, und mit dem Widerstand wird bewirkt, daß die Eingangsgleichspannung am Transimpedanzverstärker im wesentlichen konstant bleibt.

Im Zusammenhang mit einem gleichstromgekoppelten Datenübertragungssystem ist ein Verstärker für einen optischen Empfänger beschrieben worden, vgl. GB-A-2068689. Der Dynamikbereich des Verstärkers wird bei dieser Schaltungsanordnung durch einen Rückkopplungskreis mit einer Parallelschaltung aus Diode, Widerstand und Kondensator beeinflußt, wobei durch die Wirkung der Diode im wesentlichen die gleichen Nachteile auftreten wie sie bereits zuvor bei der Würdigung der in der DE-OS-32 18 439 angegebenen Schaltungsanordnung beschrieben wurden. In der Druckschrift GB-A-2068689 wird ausdrücklich auf die Schwierigkeiten bei der Verarbeitung von großen Eingangssignalen hingewiesen. Dabei treten große Verzerrungen auf, die zwar durch die Schaltungsanordnung verringert werden können, jedoch aber immer einen Kompromiß zwischen Verzerrungen und Empfindlichkeit bedingen.

Der Erfindung liegt daher die Aufgabe zugrunde, einen optischen Empfänger der eingangs genannten Art anzugeben, der sowohl einen großen Dynamikbereich als auch eine große Bandbreite aufweist und auch zur Übertragung hoher Bitraten geeignet ist. Ferner soll der Modulationsgrad eines amplitudenmodulierten Signals nicht verringert werden.

Diese Aufgabe wird erfindungsgemäß durch die im kennzeichnenden Teil des Anspruchs 1 angegebenen Merkmale gelöst. Der Transimpedanzverstärker wird -wie üblich- von einem Verstärker gebildet, der als Be-

2

schaltung einen Gegenkopplungszweig mit Widerstand aufweist. Die erfindungsgemäßen Maßnahmen führen dazu, daß stets vorhandene, also unvermeidbare, parasitäre Kapazitäten der eingesetzten Komponenten weniger in Erscheinung treten, was positive Auswirkungen auf den Freguenzgang hat. Während im Stand der Technik die dem im Widerstandswert veränderbaren Bauteil zugeordnete parasitäre Kapazität in ihrer vollen Auswirkung den Freguenzgang negativ beeinflußt, wird aufgrund des erfindungsgemäßen Spannungsteilers der durch diese Kapazität fließende Blindstrom verkleinert, wodurch es zu einer Verbesserung der Bandbreite kommt. Bei der erfindungsgemäßen Schaltungsanordnung liegt überdies die Dynamik- und Bandbreiteverbesserung eines gegengekoppelten Verstärkers vor, so daß auch sehr große Lichtpegel verarbeitet werden können, ohne daß es zu einer Übersteuerung kommt. Mithin ist eine große Dynamik und auch eine große Band breite gegeben und auch die einwandfreie Übertragung hoher Bitraten ermöglicht.

Nach einer Weiterbildung der Erfindung ist vorgesehen, daß der Spannungsteiler aus ohmschen Widerständen besteht. Zur Frequenzkorrektur ist jedoch auch ein Spannungsteiler aus entsprechend gewählten RLC-Zweipolen denkbar (Impedanzen RL,RC,LC,RLC).

Vorzugsweise ist das Stellglied ein Feldeffekttransistor, wobei insbesondere ein Gallium-Arsenid-Feldeffekttransistor eingesetzt wird. Die im Bereich des Ursprungs lineare Kennlinie des Feldeffekttransistors verringert den Modulationsgrad eines amplitudenmodulierten Eingangssignals nicht.

Bevorzugt weist der Spannungsteiler einen ersten und einen zweiten Widerstand auf, wobei der erste Widerstand mit dem Stellglied in Reihe liegt und dem zweiten Widerstand ein Kondensator zugeordnet ist. Dieser Kondensator ist mit dem zweiten Widerstand bevorzugt in Reihe geschaltet. Er führt zu einem Bezugspotential, insbesondere Masse.

Die erfindungsgemäße Schaltungsanordnung ist vorzugsweise derart dimensioniert, daß der Widerstandswert des zweiten Widerstands kleiner als der des ersten Widerstands ist. Nach einer besonders bevorzugten Ausführungsform ist der Widerstandswert des zweiten Widerstands sehr viel kleiner als der des ersten Widerstands. Der Widerstandswert des zweiten Widerstands ist in einem Ausführungsbeispiel etwa 100mal kleiner als der des ersten Widerstands.

Damit das Ausgangssignal des Transimpedanzverstärkers einen vorgegebenen Wert nicht überschreitet, ist eine Begrenzerschaltung vorgesehen, die das Stellglied entsprechend ansteuert. Die Ansteuerung erfolgt bevorzugt derart, daß auch bei sehr kleinen Eingangslichtpegeln ein möglichst großes Ausgangssignal zur Verfügung steht, wobei dieses jedoch -unabhängig von der Größe des Eingangslichtpegelsden vorgegebenen Wert aufgrund der Begrenzerschaltung nicht überschreitet.

Bei niedrigen Bitraten kann der Transimpedanzverstärker einen Operationsverstärker aufweisen, um einen einfachen Schaltungsaufbau zu erhalten.

Als lichtempfindliches Bauelement wird bevorzugt eine Fotodiode eingesetzt.

Die Zeichnungen veranschaulichen die Erfindung anhand von Ausführungsbeispielen und zwar zeigt:

Figur 1        ein Prinzipschaltbild eines optischen Empfängers,

Figur 2        ein Prinzipschaltbild der wesentlichen Komponenten des Empfängers gemäß Figur 1,

Figur 3        ein weiteres Ausführungsbeispiel entsprechend der Darstellung der Figur 2 und

Figur 4        ein Schaltplan des optischen Empfängers in der Ausführungsform der Figur 3.

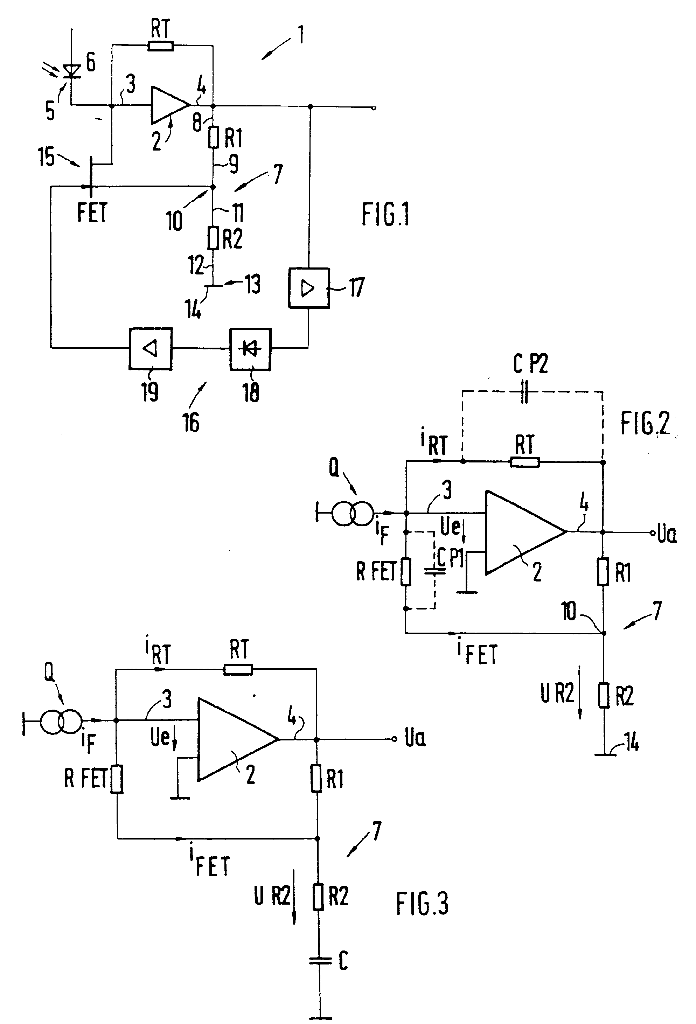

Die Figur 1 zeigt ein Prinzipschaltbild eines optischen Empfängers 1, der einen Transimpedanzverstärker aufweist: Zwischen Eingang 3 und Ausgang 4 des Verstärkers 2 ist der Transimpedanzwiderstand RT geschaltet. Zum Eingang 3 führt ferner ein lichtempfindliches Bauelement 5, das als Fotodiode 6 ausgebildet ist. Der Fotodiode 6 werden Lichtsignale über eine Lichtleitfaser eines optischen Übertragungssystems zugeleitet.

Am Ausgang 4 des Verstärkers 2 ist ein Spannungsteiler 7 angeschlossen, der aus den beiden ohmschen Widerständen R1 und R2 besteht. Der eine Anschluß 8 des ersten Widerstands R1 führt zum Ausgang 4 und der andere Anschluß 9 bildet einen Teilerabgriff 10, an dem ein Anschluß 11 des zweiten Widerstands R2 angeschlossen ist, dessen weiterer Anschluß 12 zu einem Bezugspotential 13 führt, das die Masse 14 der Schaltungsanordnung bildet.

Zwischen dem Eingang 3 und dem Teilerabgriff 10 liegt ein im Widerstandswert steuerbares Stellglied 15, das als Feldeffekttransistor FET ausgebildet ist. Bevorzugt kommt ein Gallium-Arsenit-Feldeffekttransistor (GaAs-FET) zum Einsatz. Der Steueranschluß (Gate) des Stellglieds 15 ist über eine Begrenzerschaltung 16 an den Ausgang 4 des Verstärkers 2 angeschlossen. Die Begrenzerschaltung 16 setzt sich aus einem Entkoppelverstärker 17, einem Gleichrichter 18 und einem Regelverstärker 19 zusammen. Der Regelverstärker 19 weist vorzugsweise ein I-Verhalten auf. Benutzt man als Regelkriterium den Gleichlichtanteil des empfangenen Lichts anstelle des Wechselanteils, so kann der Gleichrichter 18 entfallen. Diese Vereinfachung der Begrenzerschaltung 16 führt allerdings zu aufwendigeren Verstärkertypen. Die bessere Lösung hängt vom Einzelfall ab; unter Umständen kann z.B. auch der Entkoppelverstärker entfallen.

Die Figur 2 zeigt ein Prinzipschaltbild mit den wichtigsten Komponenten der Darstellung der Figur 1. Die Fotodiode 6 ist als Quelle Q dargestellt, die den Fotostrom $i_F$ liefert. Es sei davon ausgegangen, daß der Feldeffekttransistor FET seinen gesperrten Zustand annimmt. Er ist in Figur 2 als Widerstand R FET dargestellt, der insofern für den genannten Betriebspunkt den Widerstandswert "unendlich" aufweist. Parallel zum Widerstand R FET liegt -gestrichelt dargestellt- eine parasitäre Kapazität C P1, die unvermeidbar und daher stets vorhanden ist. Gleiches gilt für den Transimpedanzwiderstand RT, zu dem ebenfalls eine parasitäre Kapazität C P2 parallel liegt. Beide parasitären Kapazitäten verringern die Bandbreite des Empfängers, sie sollen deshalb so klein wie möglich sein. Die nachfolgenden Ausführungen zeigen, daß die parasitäre Kapazität C P1 aufgrund des erfindungsgemäßen Schaltungsaufbaus in ihrer schädlichen Wirkung vermindert wird. Daher weist der optische Empfänger 1 eine große Bandbreite auf und ist in der Lage auch Bitraten von 140 Mbit/s bei gleichzeitig großem Dynamikbereich zu übertragen. Durch den Spannungsteiler 7 wird der bei gesperrtem Feldeffekttransistor FET (R FET = ∞) durch die parasitäre Kapazität C P1 fließende Blindstrom entsprechend den gewählten Widerstandswerten (Widerstände R1 und R2) verkleinert. Die Kapazität C P1 wirkt also nicht mehr so stark. Man kann zeigen, daß die erfindungsgemäße Wirkung besonders groß ist, wenn R1 so groß wie möglich und sehr viel größer als R2 gewählt wird.

Nach einem bevorzugten Ausführungsbeispiel für ein 140 Mbit/s-System ist der Widerstand R2 sehr viel kleiner als der Widerstand R1 (z. B. R1 = 1kΩ, R2 = 10Ω). Betrachtet man nun den Betriebsfall, in dem der Feldeffekttransistor FET von der Begrenzerschaltung 16 (Fig. 1) in seinen leitenden Zustand gesteuert wird, so fließt der Fotostrom $i_F$ aufgrund der gewählten Widerstandsverhältnisse (von R1, R2, RT und R FET) und in Abhängigkeit vom Verstärkungsfaktor Vo des Transimpedanzverstärkers 2 im wesentlichen über den Widerstand R FET, d.h. der Strom $i_{FET}$ ist wesentlich größer als der Strom $i_{RT}$. Ein wesentlicher Anteil des Fotostroms $i_F$ fließt somit über den Feldeffekttransistor FET ab, so daß eine Übersteuerung des Transimpedanzverstärkers vermieden ist. Betrachtet man den Frequenzgang bei leitendem Feldeffekttransistor FET, so kann die parasitäre Kapazität C P1 vernachläßigt werden, da diese kurzgeschlossen wird. Da sich die erfindungsgemäße Schaltungsanordnung in diesem Fall wie ein invertierender, gegengekoppelter Verstärker verhält, steht eine große Bandbreite zur Verfügung. Eine besonders starke Gegenkopplung und dadurch hohen Bandbreitegewinn erhält man, wenn man R1 >> R2 oder R2 >> R1 wählt. Wegen der o.g. Vorteile wird man die Dimensionierung R1 >> R2 bevorzugen.

Die Figur 3 zeigt ein weiteres Ausführungsbeispiel, das sich gegenüber dem der Figur 2 darin unterscheidet, daß zum Widerstand R2 ein Kondensator C in Reihe liegt. Diese Ausführung wird vorteilhaft bei gleichstromgekoppelten Verstärkern verwendet. Der Kondensator C sorgt dafür, daß der Arbeitspunkt des Verstärkers 2 unabhängig vom Betriebspunkt des Feldeffekttransistors FET nicht verschoben wird. Für Wechselstrom stellt der Kondensator C quasi einen Kurzschluß dar. Gleichzeitig bildet der Widerstand R FET mit dem Widerstand R1 für Gleichstrom einen zusätzlichen Transimpedanzwiderstand. Damit verkleinert sich für die gleichstrommäßige Betrachtung der insgesamt wirksame Transimpedanzwiderstand. Dies verbessert die Dynamik. Der Frequenzgang kann verbessert werden, wenn der Kondensator C so klein gewählt wird, daß er nur für die höherfrequenten Anteile des Ausgangssignals des Verstärkers 2 quasi einen Kurzschluß darstellt.

Im nachfolgenden soll die erfindungsgemäße Schaltungsanordnung formelmäßig beschrieben werden:

Bei nichtleitendem Feldeffekttransistor FET (R FET = ∞) gilt:

$$i_F = i_{RT}.$$

Die Ausgangsspannung Ua des Verstärkers 2 bestimmt sich zu

$$Ua = -Vo \cdot Ue \quad (1)$$

Dabei stellt Vo den Verstärkungsfaktor des Verstärkers 2 dar.

Für die Eingangsspannung gilt:

$$Ue = Ua + i_F \cdot RT.$$

Mit (1) folgt:

$$Ue = -Vo \cdot Ue + i_F \cdot RT$$
$$Ue + Vo \cdot Ue = i_F \cdot RT$$
$$Ue(1 + Vo) = i_F \cdot RT.$$

Daraus ergibt sich für Ua:

$$Ua = -Ue \cdot Vo = -i_F \cdot RT \cdot \frac{Vo}{1 + Vo}. \quad (2)$$

Für Vo >> 1 gilt näherungsweise:

$$Ua = -i_F \cdot RT. \quad (3)$$

Im leitendem Zustand des Feldeffekttransistors FET gilt :

$$R \, FET \approx O.$$

und

$$R \, FET << R_E = \frac{RT}{1 + Vo} \quad (4)$$

($R_E$ = Eingangswiderstand des Transimpedanzverstärkers)

Ferner sei:

$$R2 \ll R1 \quad (5)$$

Aus (4) und (5) folgt:

$$i_{FET} \approx i_F .$$

Es gilt ferner:

$$Ua = -Vo \cdot Ue \quad (siehe\ 1)$$

$$U\,R2 = \frac{R2}{R1 + R2} \cdot Ua . \quad (6)$$

U R2 ist die am Widerstand R2 abfallende Spannung. Es gilt:

$$Ue = \frac{R2}{R1 + R2} \cdot Ua + i_F \cdot (R\,FET + \frac{R2}{R1 + R2} \cdot R1). \quad (7)$$

Mit (1) und (7) ergibt sich:

$$Ua = -i_F \cdot \frac{Vo \cdot VT \cdot R1 + R\,FET \cdot Vo}{1 + VT \cdot Vo} , \quad (8)$$

wobei

$$VT = \frac{R2}{R1 + R2}$$

ist.

Mit der Näherung

$$VT \cdot Vo \gg 1$$

ergibt sich für den Nenner von (8)

$$1 + VT \cdot Vo \approx VT \cdot Vo .$$

Damit ist

$$Ua = -i_F (R1 + \frac{R\,FET}{VT}) \quad (9)$$

Mit der Näherung R FET ≈ 0 für den leitenden Feldeffekttransistor gilt:

$$Ua = -i_F \cdot R1 \quad (10)$$

Anhand der vorstehenden Bezeichungen wird nun der Dynamikgewinn der erfindungsgemäßen Schaltung beispielhaft erläutert:

Die Ausgangsspannung Ua für den nichtleitenden Feldeffekttransistor FET sei mit Ua∞, für den leitenden Feldeffekttransistor FET mit Uao bezeichnet.

Damit ergibt sich:

Ua∞ (R FET → ∞) :

$$Ua\infty = -i_F \cdot RT \quad (siehe\ (3))$$

Uao (R FET → O):

$$Uao = -i_F \cdot R1 \quad (siehe\ (10)).$$

Setzt man Ua∞ und Uao zueinander ins Verhältnis, so ergibt sich der maximale Dynamikgewinn G:

$$G = \frac{Ua\infty}{Uao} = \frac{-i_F \cdot RT}{-i_F \cdot R1}$$

Daraus folgt:

$$G = \frac{RT}{R1} . \quad (11)$$

Beispielsrechnung:

Mit RT = 35 kΩ

R1 = 1kΩ ergibt sich:

$$\frac{Ua\infty}{Uao} = \frac{35k\Omega}{1k\Omega2} = 35 .$$

Die maximale Eingangslichtleistung darf nun um

$$10 \cdot lg\,G = 15,4\ dB$$

höher sein.

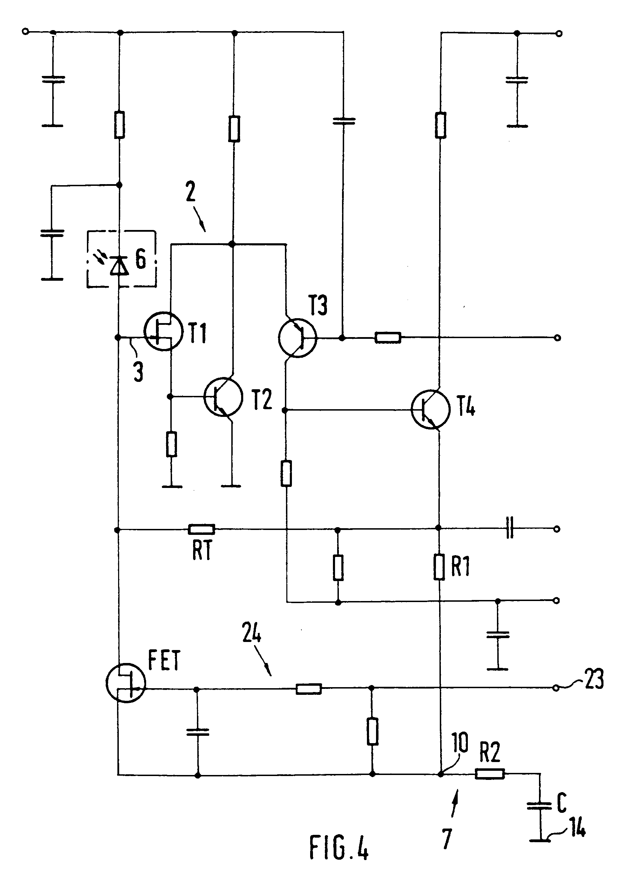

Im nachfolgenden sollen die wichtigsten Komponenten des Schaltbilds der Figur 4 näher erläutert werden, bei dem der Verstärker 2 diskret aufgebaut ist. Die Fotodiode 6 ist an den Eingang 3 des Transimpedanzverstärkers 2 angeschlossen, der als Eingangstransistor T1 einen Gallium-Arsenid-Feldeffekttransistor aufweist. Dieser Transistortyp ist rauscharm und besitzt sehr kleine parasitäre Kapazitäten. Der Transimpedanzverstärker 2 weist ferner Transistoren T2 und T3 auf, die eine Kaskodenstufe bilden. Hieran ist ein Transistor T4 angeschlossen, der als Emitterfolger arbeitet. Der Emitter des Transistors T4 liegt am Transimpedanzwiderstand

5

RT, der an den Eingang 3 zurückgeführt ist (Gegenkopplung). Ferner steht der Emitter des Transistors T4 mit dem erfindungsgemäßen Spannungsteiler 7 in Verbindung, dessen Widerstände R1 und R2 am Teilerabgriff 10 miteinander verbunden sind. Der Widerstand R2 führt über den Kondensator C nach Masse 14. An den Teilerabgriff 10 ist die Drain-Source-Strecke des Feldeffekttransistors FET angeschlossen, die zum Eingang 3 führt. Das Gate des Feldeffekttransistors FET -der vorzugsweise ebenfalls als Gallium-Arsenid-Feldeffekttransistor ausgebildet ist- führt zu einer Klemme 23, an die die zuvor erwähnte Begrenzerschaltung 16 (Figur 1) angeschlossen ist. Dem Feldeffekttransistor FET ist eine Schutzbeschaltung 24 zugeordnet, die die Gate-Source-Strecke des Feldeffekttransistors FET vor unzulässig hohen Spannungen durch statische Entladung schützt.

## Patentansprüche

1. Optischer Empfänger (1) mit einem von einem lichtempfindlichen Bauelement (5) angesteuerten Transimpedanzverstärker (2) und mit einem am Eingang (3) des Transimpedanzverstärkers (2) angeschlossenen im Widerstandswert veränderbaren Bauteil (15), dessen Widerstandswert von der Größe der Ausgangsspannung des Transimpedanzverstärkers (2) über eine Steuerschaltung (16) veränderbar ist, **dadurch gekennzeichnet,** daß an dem Ausgang (4) des Transimpedanzverstärkers (2) ein Spannungsteiler (7) aus einem ersten ohmschen Widerstand (R1) und einem zweiten ohmschen Widerstand (R2) derart angeschlossen ist, daß der erste Anschluß des ersten ohmschen Widerstandes (R1) mit dem Ausgang (4) des Transimpedanzverstärkers (2) verbunden ist, daß der Verbindungspunkt zwischen zweitem Anschluß des ersten ohmschen Widerstandes (R1) und erstem Anschluß des zweiten ohmschen Widerstandes (R2) einen Teilerabgriff (10) bildet und daß der zweite Anschluß des zweiten ohmschen Widerstandes (R2) an Masse liegt, wobei der Teilerabgriff (10) so gewählt ist, daß der erste ohmsche Widerstand (R1) sehr viel größer als der zweite ohmsche Widerstand (R2) ist und daß der Teilerabgriff (10) über das veränderbare Bauteil (15) zum Eingang (3) des Transimpedanzverstärkers (2) führt.

2. Optischer Empfänger (1) nach Anspruch 1, dadurch gekennzeichnet, daß das veränderbare Bauteil (15) ein Feldeffekttransistor (FET) ist, dessen Gate mit der Steuerschaltung (16) verbunden ist und dessen Drain-Source-Strecke an den Teilerabgriff (10) des Spannungsteilers (7) geschaltet ist.

## Claims

1. Optical receiver (1) with a transimpedance amplifier (2) activated by a photosensitive component (5) and with a component (15) variable in resistance value that is connected to the input (3) of the transimpedance amplifier (2) and whose resistance value can be varied through the magnitude of the output voltage of the transimpedance amplifier (2) via a control circuit (16), characterised in that a voltage divider (7) consisting of a first ohmic resistor (R1) and a second ohmic resistor (R2) is connected to the output (4) of the transimpedance amplifier (2) in such a way that the first terminal of the first ohmic resistor (R1) is connected to the output (4) of the transimpedance amplifier (2), that the connection point between the second terminal of the first ohmic resistor (R1) and the first terminal of the second ohmic resistor (R2) forms a divider tap (10) and that the second terminal of the second ohmic resistor (R2) is earthed, wherein the divider tap (10) is so selected that the first ohmic resistor (R1) is very much greater than the second ohmic resistor (R2) and that the divider tap (10) leads via the variable component (15) to the input (3) of the transimpedance amplifier (2).

2. Optical receiver (1) according to claim 1, characterised in that the variable component (15) is a field-effect transistor (FET) whose gate is connected to the control circuit (16) and whose drain-to-source section is connected to the divider tap (10) of the voltage divider (7).

## Revendications

1. Récepteur optique (1) comportant un amplificateur d'adaptation d'impédance (2) excité par un élément (5) sensible à la lumière ainsi qu'un composant (15), de valeur variable de la résistance, qui est relié à l'entrée (3) de l'amplificateur d'adaptation d'impédance (2) et dont la valeur de la résistance peut varier en fonction de la valeur de la tension de sortie dans l'amplificateur d'adaptation d'impédance (2) et par l'intermédiaire d'un circuit de commande (16), caractérisé par le fait qu'à la sortie (4) de l'amplificateur d'adaptation d'impédance (2), un diviseur de tension (7), constitué d'une première résistance ohmique (R1) et d'une seconde résistance ohmique (R2), est connecté de façon que la première connexion de la première résistance ohmique (R1) soit reliée avec la sortie (15) de l'amplificateur d'adaptation d'impédance (2), que le point de liaison entre la seconde connexion de la première résistance ohmique (R1) et la première connexion de la seconde résistance ohmique (R2) forme une prise (10) sur le diviseur et que la seconde connexion de la seconde résistance ohmique (R2) soit à la masse, la prise (10) sur le diviseur étant choisie de façon que la première résistance ohmique (R1) soit de beaucoup supérieure à la seconde résistance ohmique (R2) et que la prise (10) sur le diviseur conduise, par l'intermédiaire du composant variable (15), à l'entrée (3) de l'amplificateur d'adaptation d'impédance (3).

2. Récepteur optique (1) selon la revendication 1, caractérisé par le fait que le composant variable (15) est un transistor à effet de champ (FET) dont la gâchette est reliée au circuit de commande (16) et dont l'élément de circuit drain-source est mis en circuit à la prise (10) du diviseur de tension (7).

FIG.1

FIG.2

FIG.3

FIG.4